# FASCICULE DE BREVET EUROPEEN

(11) **EP 2 655 448 B1**
(45) Date de publication et mention de la délivrance du brevet: **24.09.2014**
(21) Numéro de dépôt: 11802403.3
(22) Date de dépôt: 20.12.2011
(51) Int. Cl.: C08F 220/06, C08F 220/28, C08F 220/58, C04B 24/26, C08F 283/06, C08F 8/14

(54) **POLYMÈRE COMPORTANT UNE FONCTION HYDROLYSABLE UTILISABLE COMME FLUIDIFIANT**
POLYMER MIT EINER HYDROLYSIERBAREN FUNKTION ZUR VERWENDUNG ALS VERDÜNNER
POLYMER COMPRISING A HYDROLYSABLE FUNCTION THAT CAN BE USED AS A THINNER

(30) Priorité: 21.12.2010 FR 1060920
(43) Date de publication de la demande: 30.10.2013
(73) Titulaire: Chryso, 92440 Issy-Les-Moulineaux (FR)
(72) Inventeur: AGNELY, Mathias, F-92340 Bourg-La-Reine (FR); BOUSTINGORRY, Pascal, F-91650 Breuillet (FR); CHOUGRANI, Kamel, F-45470 Loury (FR)
(74) Mandataire: Blot, Philippe Robert Emile
(86) Numéro de dépôt international: PCT/EP2011/073446
(87) Numéro de publication internationale: WO 2012/084979

(56) Documents cités:
- FR-A1- 2 861 399
- US-B1- 7 579 386

## Description

La présente invention concerne un polymère, son procédé de préparation et ses utilisations comme fluidifiant dans des compositions hydrauliques.

### [Art antérieur]

Les compositions hydrauliques sont des compositions comprenant un liant hydraulique. Un liant hydraulique est un liant qui se forme et durcit par réaction chimique avec de l'eau. A titre de liants hydrauliques peuvent être citées les compositions de plâtres, de sulfates et aluminates de calcium, de chaux et de ciment. Les mortiers et les bétons, notamment les bétons préfabriqués et les bétons prêts à l'emploi, sont d'importance particulière. Ces matériaux peuvent être destinés notamment au bâtiment, aux ouvrages de génie civil ou à la préfabrication.

Il est connu d'ajouter aux liants hydrauliques des fluidifiants (également appelés plastifiants ou superplastifiants) qui permettent de fluidifier la composition hydraulique et ainsi de diminuer la teneur en eau de la pâte de liant hydraulique. Ainsi, la pâte de liant hydraulique présente, après durcissement, une structure plus dense. Ceci se traduit par une résistance mécanique plus élevée.

On connaît notamment les polycarboxylates de polyoxyalkylène (PCP), particulièrement efficaces pour fluidifier les compositions hydrauliques et aussi appelés superplastifiants.

Récemment, on a développé des fluidifiants permettant de maintenir une fluidité améliorée des compositions hydrauliques dans le temps. Des fluidifiants ayant une structure évoluant dans le temps dans le béton frais ont été développés. Ces fluidifiants sont des polymères peignes dont les chaînes latérales comportent des fonctions ester, qui sont hydrolysés dans les conditions basiques régnant dans les compositions hydrauliques en libérant au cours du temps des fonctions carboxylate. Ces fonctions carboxylate sont susceptibles de s'adsorber sur les grains de liant hydraulique, notamment de ciment, ce qui induit une répulsion entre les grains et permet ainsi de maintenir une bonne fluidité de la composition dans le temps. De tels fluidifiants sont notamment décrits dans US 2002/0007019 (Schober et al.), WO 2004/099099 (Nippon Shokubai) et EP 0 846 090 (Kao corporation).

### [Problème technique]

Un des objectifs de l'invention est de fournir des composés utiles comme fluidifiants permettant à la fois d'améliorer le maintien de fluidité de compositions hydrauliques dans le temps plus efficacement que les fluidifiants de l'art antérieur et d'inhiber la formation de fissures dans la composition hydraulique durcie.

### [Description de l'invention]

### [Polymère]

Selon un premier aspect, l'invention concerne un polymère comprenant une chaîne principale comprenant des motifs de formules (A): 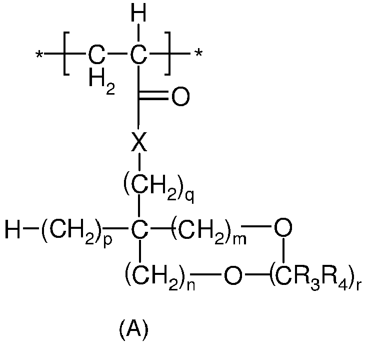 et des chaînes latérales comprenant des groupes R₂,
où :
- X représente O ou NH,
- R₂ représente un groupe (R₇O)_{z}R₈, avec :
   - R₇ représente un groupe alkylène en C₂-C₃,
   - R₈ représente H, un alkyle, un cycloalkyle en C₁-C₁₂ ou un aryle éventuellement substitués, et
   - z représente un nombre entier de 1 à 250,
- m, n, p et q représentent indépendamment un nombre entier compris entre 0 et 3,
- r représente un nombre entier compris entre 1 et 3,
- R₃ et R₄ représentent indépendamment H ou un groupe alkyle en C₁-C₆.

Le polymère selon l'invention comprend des chaînes latérales comprenant des groupes R₂. Chaque groupe R₂ peut être lié à la chaîne principale du polymère par:
- une liaison simple (le polymère peut par exemple comprendre des groupes vinylique porteur de groupe R₂),
- un groupe méthylène (le polymère peut par exemple comprendre des groupes allylique porteur de groupe R₂),
- une fonction amide,
- une fonction ester (le polymère peut par exemple comprendre des groupes (alkyl)acrylate porteur de groupe R₂).

Généralement, les groupes R₂ sont lié à la chaîne principale du polymère par des fonctions esters, et le polymère comprend typiquement des motifs de formules (A) et (B) suivantes : 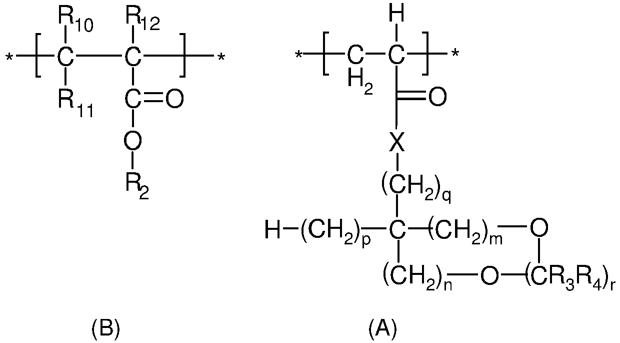 dans lesquels :
- X représente O ou NH,
- R₂ représente un groupe (R₇O)_{z}R₈, avec :
   - R₇ représente un groupe alkylène en C₂-C₃,
   - R₈ représente H, un alkyle ou un cycloalkyle en C₁-C₁₂, ou un aryle éventuellement substitués, et
   - z représente un nombre entier de 1 à 250,
- m, n, p et q représentent indépendamment un nombre entier compris entre 0 et 3,
- r représente un nombre entier compris entre 1 et 3,
- R₃ et R₄ représentent indépendamment H ou un groupe alkyle en C₁-C₆,
- R₁₀, R₁₁ et R₁₂ représentent indépendamment un groupe choisi parmi H, alkyle, -COO-alkyle, COOR₂ et COO(M)_{1/c} où M représente un cation et c est un nombre entier représentant la valence du cation M.

Avantageusement, les compositions hydrauliques comprenant les polymères susmentionnés présentent un bon maintien de fluidité dans le temps, généralement jusqu'à une heure, voire plus de deux heures, après mélange des composants de la composition hydraulique. On considère que la fluidité est maintenue lorsque la valeur d'étalement de la composition a diminué de moins de 50% , notamment moins de 30%, de préférence moins de 10% par rapport à sa valeur initiale, juste après préparation de la composition hydraulique.

Le polymère selon l'invention a une structure évoluant dans le temps lorsqu'il est ajouté dans les compositions hydrauliques. En effet, les motifs de formule (A) sont hydrolysés lentement dans les conditions basiques régnant dans les compositions hydrauliques, libérant ainsi des fonctions carboxylate. Ces fonctions carboxylate sont susceptibles de s'adsorber sur les grains de liant hydraulique, ce qui est supposé contribuer à maintenir une bonne fluidité de la composition hydraulique dans le temps. On parle de « motif hydrolysable » issu d'un « monomère hydrolysable ».

En plus des motifs de formule (A) et des chaînes latérales comprenant des groupes de formule (R₇O)_{z}R₈, le polymère peut contenir un ou plusieurs motifs provenant de monomères choisis parmi les monomères suivants :
- monomère ionique ou ionisable du type phosphonique, sulfonique ou carboxylique. Le méthacrylate de phosphoéthyle ou les monométhacrylates d'esters de phosphate de polyéthylène glycol, tels que les monomères de la gamme Sipomer PAM commercialisés par la société Rhodia sont des exemples de monomères phosphonique. L'acide vinyl sulfonique et ses sels, l'acide styrène sulfonique et ses sels, l'acide 2-acrylamido-2-methylpropane sulfonique et ses sels, l'acide allyoxyhydroxypropyle sulfonique et ses sels et l'acide méthallylsulfonique et ses sels peuvent être utilisés comme monomères sulfonique. L'acide acrylique, l'acide méthacrylique, l'acide maléique, l'acide fumarique, l'acide itaconique, l'acide crotonique sont des exemples de monomères carboxyliques.
- monomère comprenant un groupe polyalkylène glycol, notamment polyéthylène glycol (PEG), par exemple :
   - (méth)acrylate de polyalkylène glycol, notamment de polyéthylène glycol (PEG), les monomères de type acrylate de PEG étant avantageusement utilisés du fait de leur caractère hydrolysable dans les compositions hydrauliques;
   - maléate de polyalkylène glycol, notamment de polyéthylène glycol,
   - vinyl éther de polyalkylène glycol, notamment de polyéthylène glycol, ou
   - allyle de polyalkylène glycol, notamment de polyéthylène glycol, en particulier l'allyle de l'éther méthylique de polyéthylène glycol (de formule CH=CH-CH₂-(O-CH₂-CH₂)ₙ-OMe), dont le poids moléculaire est compris par exemple entre 100 et 10000, de préférence entre 350 et 7000 et avantageusement entre 350 et 5000 ; et/ou
- monomère hydrolysable, tel que l'acrylate de PEG ou les acrylates d'éther d'alkyl-PEG, l'acrylamide et ses dérivés, l'acrylonitrile et ses dérivés, les acrylates d'alkyle tel que l'acrylate d'éthyle, les acrylates d'hydroxyalkyle tels que l'hydroxyéthyl acrylate, les esters de vinyle d'acides carboxyliques tels que l'acétate de vinyle, les anhydrides carboxyliques copolymérisables tels que l'anhydride maléique ou l'anhydride méthacrylique, les monomères à fonctions imide tels que la maléimide et ses dérivés.
- monomère non hydrolysable, tel que le styrène, les méthacrylates d'alkyle comme le méthacrylate de méthyle.

Les monomères susmentionnés sont introduits dans le polymère par copolymérisation (incorporation dans la chaîne principale) ou par postfonctionnalisation, notamment postestérification (incorporation dans les chaînes latérales). Les procédés de préparation sont décrits ci-après.

Les monomères hydrolysables (y compris les monomères correspondant aux motifs de formule (A)) représentent généralement de 5 % à 95 % molaire de l'ensemble des monomères mis en oeuvre, de préférence de 10 % à 60 % molaire de l'ensemble des monomères mis en oeuvre.

De préférence, X représente O. En effet, lorsque X représente O, la chaîne latérale porteuse du groupe 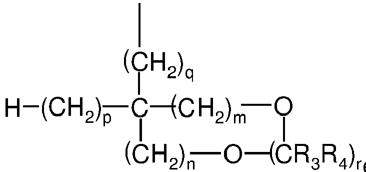 est liée à la chaîne principale par une fonction ester, qui s'hydrolyse généralement plus facilement qu'une fonction amide (lorsque X représente NH) pour former des fonctions carboxylate, qui permettent de maintenir une bonne fluidité de la composition hydraulique (comme explicité ci-dessous).

Typiquement, R₁₀, R₁₁ et R₁₂ représentent H ou un alkyle. De préférence, R₁₀ et R₁₁ représentent H et R₁₂ représente un méthyle.

Dans un mode de réalisation préféré, le polymère comprend les motifs de formules (A), (B) et (C) suivantes : 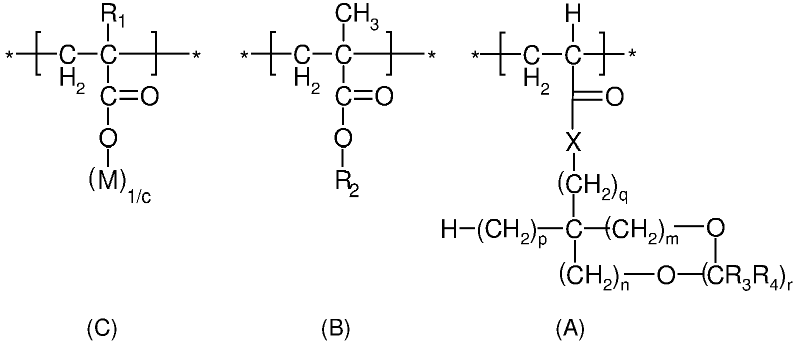 dans lesquels :
- X représente O ou NH,
- R₁ représente H ou un méthyle,
- R₂ représente un groupe (R₇O)_{z}R₈, avec :
   - R₇ représente un groupe alkylène en C₂-C₃,
   - R₈ représente H, un alkyle ou un cycloalkyle en C₁-C₁₂, ou un aryle éventuellement substitués, et
- z représente un nombre entier de 1 à 250,
- m, n, p et q représentent indépendamment un nombre entier compris entre 0 et 3,
- r représente un nombre entier compris entre 1 et 3,
- R₃ et R₄ représentent indépendamment H ou un groupe alkyle en C₁-C₆,
- M représente H ou un cation et c est un nombre entier représentant la valence du cation M.

De préférence, le polymère consiste en un enchaînement des trois motifs précités sans incorporation d'autres motifs, et a donc la formule (I) suivante : 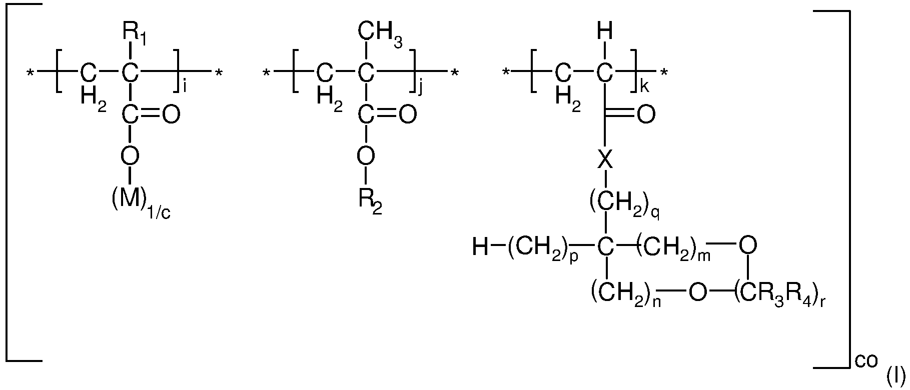 dans laquelle :
- i, j et k représentent indépendamment un nombre entier de 1 à 1000,
- M, X, c, R₁, R₂, R₃, R₄, m, n, p, q et r sont tels que définis ci-dessus.

Dans le cadre de cet exposé, par « polymère », on entend un composé comprenant l'enchaînement covalent de motifs (ou unités) monomères identiques ou différents entre eux, généralement de plus de 10 motifs monomères, typiquement de plus de 100 motifs monomères. Un copolymère comprend un enchaînement covalent d'au moins deux types de motifs différents.

Dans le cadre de cet exposé, par « chaîne latérale » ou « chaîne pendante », on entend une chaîne liée de façon covalente à la chaîne principale du polymère. Par exemple, les groupes COOR₂ et 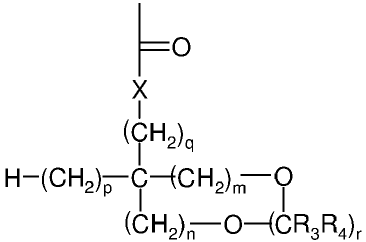 sont des chaînes latérales du polymère de formule (I).

Dans le cadre de cet exposé, et sauf mention contraire, par « chaîne hydrocarbonée », on entend une chaîne comprenant un ou plusieurs atomes de carbone et un ou plusieurs atomes d'hydrogène, cette chaîne étant fonctionnalisée ou non fonctionnalisée, droite, ramifiée ou cyclique, saturée ou insaturée. Les chaînes hydrocarbonées présentes au sein d'un polymère selon l'invention comprennent de préférence de 1 à 12 atomes de carbone, de préférence moins de 6 atomes de carbone.

Dans le cadre de cet exposé, et sauf mention contraire, les groupes alkyle représentent des chaînes hydrocarbonées saturées monovalentes, en chaîne droite ou ramifiée ou cyclique (par exemple un radical cyclohexyle), de 1 à 12 atomes de carbone, de préférence de 1 à 6 atomes de carbone. Comme exemples de radicaux alkyle peuvent notamment être cités :
- lorsqu'ils sont linéaires, les radicaux méthyle, éthyle, propyle, butyle, pentyle, hexyle, octyle, nonyle, décyle, dodécyle, tétradécyle, hexadécyle, et octadécyle,
- lorsqu'ils sont ramifiés, les groupements isopropyle, s-butyle, isobutyle et *t*-butyle.

Dans le cadre de cet exposé, et sauf mention contraire, les radicaux alkylène représentent des radicaux hydrocarbonés saturés divalents, en chaîne droite ou ramifiée, de 1 à 10 atomes de carbone, de préférence de 1 à 6 atomes de carbone. Les radicaux méthylène, éthylène et propylène sont particulièrement préférés.

Dans le cadre de cet exposé, et sauf mention contraire, les radicaux aryle représentent des systèmes aromatiques hydrocarbonés, mono ou bicycliques de 6 à 10 atomes de carbone. Parmi les radicaux aryles, on peut notamment citer le radical phényle ou naphtyle.

Les groupes alkyle, cycloalkyle et/ou aryle sont éventuellement substitués par un ou plusieurs groupes halogène, notamment fluor, chlore ou brome, alkyle notamment méthyle, ou alkoxy, notamment méthoxy.

Un cation est un ion porteur d'une charge positive. Les cations ammonium ou métalliques, notamment de métal alcalin ou alcalinoterreux sont préférés. Les cations de métal alcalin sont de préférence Li⁺, Na⁺, K⁺ et Cs⁺. Les cations de métal alcalino-terreux sont de préférence Ca²⁺ et Mg²⁺. Un cation ammonium est un cation comportant un atome azote porteur d'une charge positive. Le cation ammonium correspond :
- soit à la forme protonée d'une fonction amine, qui peut être primaire, secondaire, tertiaire ou aromatique,
- soit à un cation ammonium quaternaire, par exemple un tétraalkylammonium.

Par l'indice « co », on entend que l'arrangement des unités consécutives du polymère n'est pas spécifié. L'arrangement des motifs dans le polymère peut par exemple être à blocs, alterné, statistique ou à gradient de composition.

Par « * », on entend que les différentes unités peuvent être assemblées les unes aux autres en tout ordre, chaque unité étant généralement assemblée de tête à queue.

Les modes de réalisations préférentiels suivants peuvent être mis en oeuvre de façon combinée ou indépendante :
- X représente O,
- R₇ représente un groupe éthylène,
- R₈ représente H, ou un alkyle en C₁-C₁₂, notamment un méthyle ou un éthyle,
- z représente un nombre entier entre 8 et 230, notamment entre 15 et 115, typiquement 108,
- R₂ est un groupe -(CH₂-CH₂-O)₁₀₈-Me, susceptible d'être obtenu par estérification avec un méthyl éther poly(éthylène glycol) de masse moléculaire de 4750 g/mol (MPEG 4750),
- i, j et k représentent indépendamment un nombre entier compris entre 1 et 100,
- q représente 0 ou 1, en particulier 1,
- p représente 0, 1 ou 2, en particulier 2,
- m représente 1,
- n représente 1,
- r représente 1,
- R₃ et R₄ représentent indépendamment H, un méthyle ou un éthyle, de préférence H,
- le rapport i/(i+j+k) est de 0,01 à 0,8, notamment de 0,01 à 0,2, en particulier de 0,02 à 0,05,
- le rapport j/(i+j+k) est de 0,01 à 0,65, notamment de 0,2 à 0,5,
- le rapport k/(i+j+k) est de 0,05 à 0,90, notamment de 0,3 à 0,7.

Généralement, le polymère comprend de 2 à 20% en masse, typiquement de 2 à 10% en masse d'unité de formule (A).

De préférence, la masse moléculaire en poids du polymère est de 5000 à 500 000 g/mol.

De préférence, le polymère selon l'invention a la formule (I') suivante : 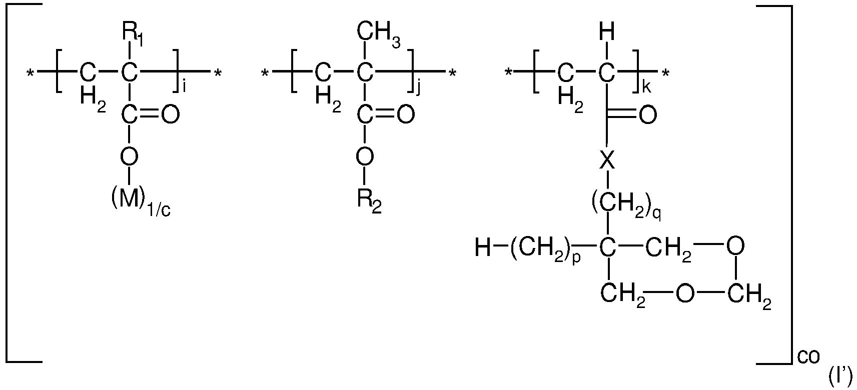 dans laquelle X, R₁, R₂, M, c, i, j, k, p et q sont tels que définis ci-dessus.

De préférence, le polymère selon l'invention a la formule (I") suivante : 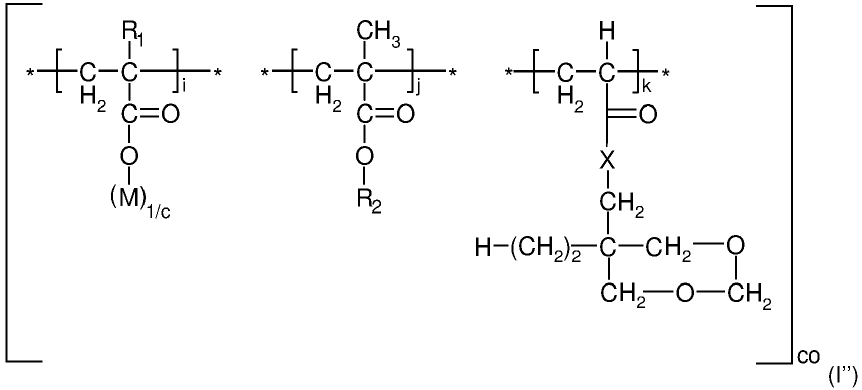 dans laquelle X, R₁, R₂, M, c, i, j et k sont tels que définis ci-dessus.

### [Procédé de préparation]

Selon un deuxième aspect, l'invention concerne un procédé de préparation d'un polymère tel que défini ci-dessus, comprenant une étape a1) de copolymérisation d'un monomère de formule (XII) suivante : 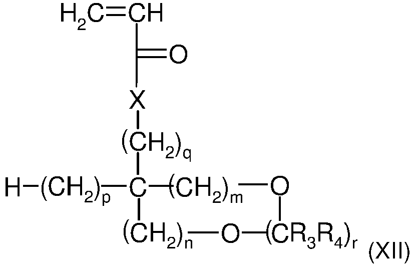 dans laquelle X, R₃, R₄, m, n, p, q et r sont tels que définis ci-dessus, avec un monomère de formule (XI') suivante : 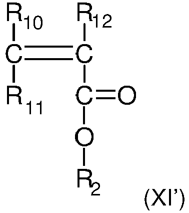 dans laquelle R₂, R₁₀, R₁₁ et R₁₂ sont tels que définis ci-dessus.

Les fonctions alcène des deux monomères réagissent entre-elles pour former la chaîne principale du polymère. Les chaînes latérales du polymère formé comprennent notamment des groupes de formules COOR₂ et

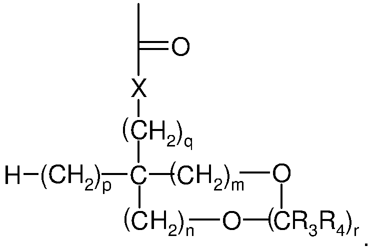

D'autres monomères peuvent être ajoutés lors de l'étape a1) de copolymérisation, notamment ceux mentionnés ci-dessus, comme les monomères ioniques ou ionisables du type phosphonique, sulfonique ou carboxylique, les monomères comprenant un groupe polyalkylène glycol, les monomères hydrolysables et/ou les monomères non hydrolysables. La préparation des polymères se fait selon les conditions connues de l'homme de l'art, notamment en suivant les procédures décrites dans le brevet FR 2 892 420.

Le procédé de préparation permet notamment de préparer le polymère comprenant les motifs de formules suivantes : 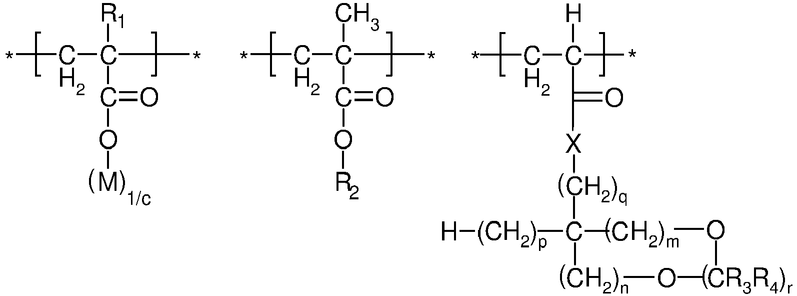 en mettant en oeuvre une polymérisation des monomères correspondant aux unités recherchées ou de leurs précurseurs le cas échéant.

Le procédé de préparation de ce polymère comprend de préférence une étape a1) de copolymérisation de monomères de formules (X), (XI) et (XII) suivantes : 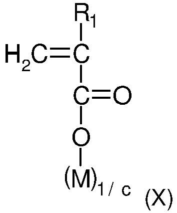 dans laquelle R₁, M et c sont tels que définis ci-dessus, 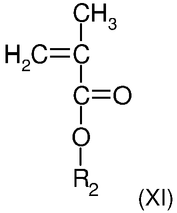 dans laquelle R₂ est tel que défini ci-dessus, 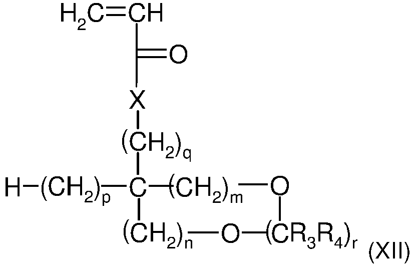 dans laquelle X, R₃, R₄, m, n, p, q et r sont tels que définis ci-dessus.

De préférence, le monomère (XII) mis en oeuvre dans l'étape a1) a la formule (XII') suivante : 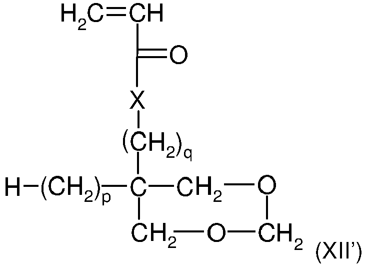 dans laquelle X, p et q sont tels que définis ci-dessus, et en particulier la formule (XII") suivante : 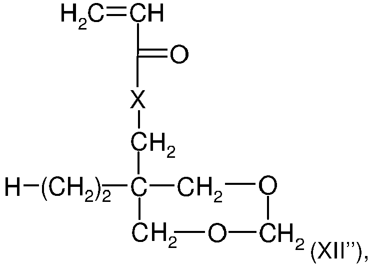 où X représente O ou NH, de préférence O, qui correspond alors à l'acrylate du formal triméthylolpropane cyclique, qui est avantageusement disponible commercialement.

Dans un autre mode de réalisation, le procédé de préparation du polymère comprend les étapes consistant à :
a2) copolymériser un monomère de formule (XXII) suivante : 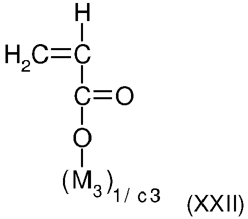 dans laquelle M₃ représente H, un cation métallique ou un cation ammonium et c3 est un nombre entier représentant la valence du cation M₃,
   avec un monomère de formule (XXI') suivante : 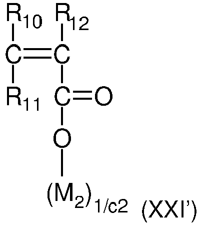 dans laquelle R₁₀, R₁₁ et R₁₂ sont tels que définis ci-dessus, M₂ représente H, un cation métallique ou un cation ammonium et c2 est un nombre entier représentant la valence du cation M₂,
b) estérification du polymère obtenu lors de l'étape a2) par des composés R₂-GP₁ et 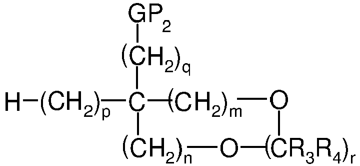 dans lesquelles R₂, R₃, R₄, m, n, p, q et r sont tels que définis ci-dessus et GP₁ et GP₂ sont des groupes partants, notamment indépendamment choisis parmi -OH, -OTs (tosylate), Oms (mésylate), -CI et -Br.

En particulier, le procédé comprend les étapes consistant à :
a2) copolymériser des monomères de formules (X), (XXI) et (XXII) suivantes : 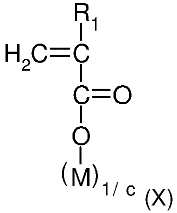 dans laquelle R₁, M et c sont tels que définis ci-dessus, 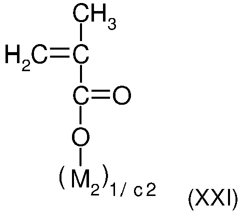 dans laquelle M₂ représente H, un cation métallique ou un cation ammonium et c2 est un nombre entier représentant la valence du cation M₂, 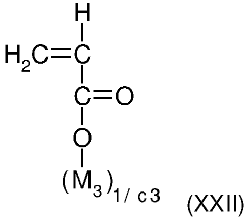 dans laquelle M₃ représente H, un cation métallique ou un cation ammonium et c3 est un nombre entier représentant la valence du cation M₃, pour obtenir un polymère (XXV) comprenant des motifs de formules suivantes : 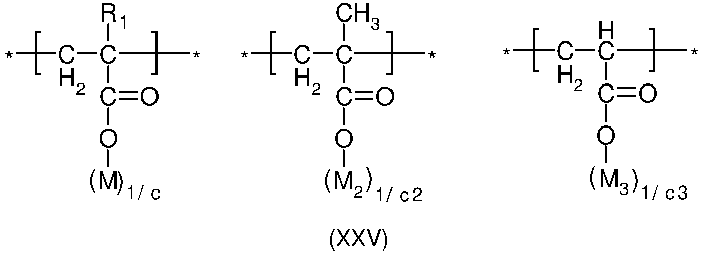
b) estérification du polymère (XXV) par des composés R₂-GP₁ et 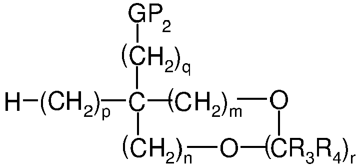 dans lesquelles R₂, R₃, R₄, m, n, p, q et r sont tels que définis ci-dessus et GP₁ et GP₂ sont des groupes partants, notamment indépendamment choisis parmi -OH, -OTs, OMs, -CI et -Br.

Lors de l'étape b), les composés de formule R₂-GP₁ (ou GP₁-(R₇O)_{z}R₈) et 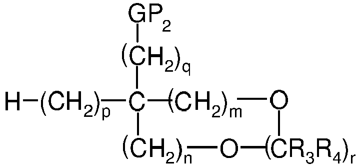 réagissent de façon non régiosélective avec les fonctions carboxyliques ou carboxylate, ce qui conduit au greffage statistique des groupes R₂ et 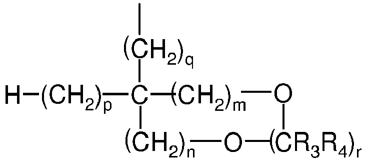 sur les fonctions carboxylate ou carboxylique du polymère obtenu à la fin de l'étape a2), notamment de formule (XXV). Par conséquent, le mélange de polymères obtenu à la fin de l'étape b) comprend le polymère tel que défini ci-dessus. Ainsi, le premier mode de réalisation du procédé (comprenant l'étape a1)) est préféré car il permet d'obtenir le polymère avec une pureté améliorée par rapport au deuxième mode de réalisation.

De préférence, l'étape de copolymérisation est effectuée par polymérisation radicalaire, typiquement en présence d'un initiateur et d'un agent de transfert.

L'initiateur est par exemple du peroxyde d'hydrogène, un couple oxydoréducteur, l'agent oxydant étant notamment du persulfate d'ammonium et l'agent réducteur étant notamment du métabisulfite de métal alcalin, par exemple de sodium, ou un amorceur azoïque hydrosoluble comme par exemple le dihydrochlorure du 2,2'-azobis(2-amidinopropane) ou le dihydrate du 2,2'-azobis( 2-methylpropionamide).
L'agent de transfert peut notamment être du méthallyl sulfonate de sodium, du 2-mercaptoéthanol, l'acide mercaptoacétique, l'acide mercaptosuccinique ou un alkyl mercaptan.

Le procédé peut être réalisé en batch ou de façon semi-continue, et est de préférence semi-continu.

Lors de la polymérisation, le pH est généralement ajusté entre 1 et 3, de préférence de l'ordre de 2, selon des méthodes connues de l'homme du métier.
La température lors de la polymérisation est généralement de 40 à 80 °C, de préférence de 60 à 70 °C.

De préférence, les procédés de préparation décrits ci-dessus ne mettent pas en oeuvre des monomères acrylates d'alkyle inférieur (notamment l'acrylate de méthyle ou d'éthyle) ou d'hydroxyalkyle inférieur (notamment l'acrylate de 2-hydroxyéthyle), contrairement aux procédés de préparation de certains fluidifiants de l'art antérieur. Ces monomères sont délicats à utiliser en raison de leur point éclair bas (proche de 2°C et 15°C pour l'acrylate de méthyle et d'éthyle) ou de leur toxicité dans le cas de l'acrylate de 2-hydroxyéthyle. De plus, les alcools libérés correspondants sont volatiles (COV) dans le cas du méthanol et de l'éthanol et/ou toxique dans le cas de l'éthylène glycol et du méthanol. Les monomères utilisés dans les procédés de préparation selon l'invention sont avantageusement peu toxiques et ont des points éclair élevés, ce qui est avantageux en termes de sécurité.

### [Utilisations]

Selon un troisième aspect, l'invention concerne l'utilisation du polymère tel que défini ci-dessus à titre de fluidifiant (ou plastifiant) pour des compositions hydrauliques, notamment pour améliorer le maintien de fluidité de compositions hydrauliques dans le temps, généralement jusqu'à une heure, voire plus de deux heures, après mélange des composants de la composition hydraulique et pour inhiber la formation de fissures dans la composition hydraulique durcie.

Sans vouloir être lié par une théorie particulière, le bon maintien de fluidité peut s'expliquer grâce à la structure spécifique des polymères selon l'invention, qui évolue dans le temps dans la composition hydraulique, qui est un milieu alcalin, généralement de pH compris entre 11 et 13.
En effet, dans ces conditions, on observe une hydrolyse progressive des fonctions ester (X représente O) ou amide (X représente NH) latérales du motif de formule (A): 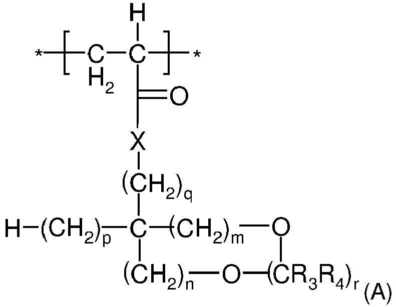 dans la composition hydraulique, qui génère au cours du temps:
- des fonctions carboxylate sur le polymère, susceptibles de s'adsorber sur les grains de liant hydraulique, créant de ce fait une répulsion entre les grains et permettant ainsi de maintenir une bonne fluidité de la composition hydraulique,
- un alcool (X représente O) ou une amine (X représente NH) de formule (A') suivante 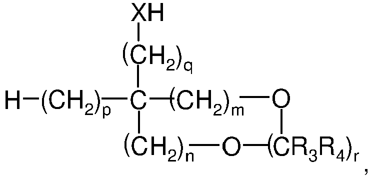 dans laquelle X, m, n, p, q et r sont tels que définis ci-dessus.
selon le schéma 1 ci-dessous.

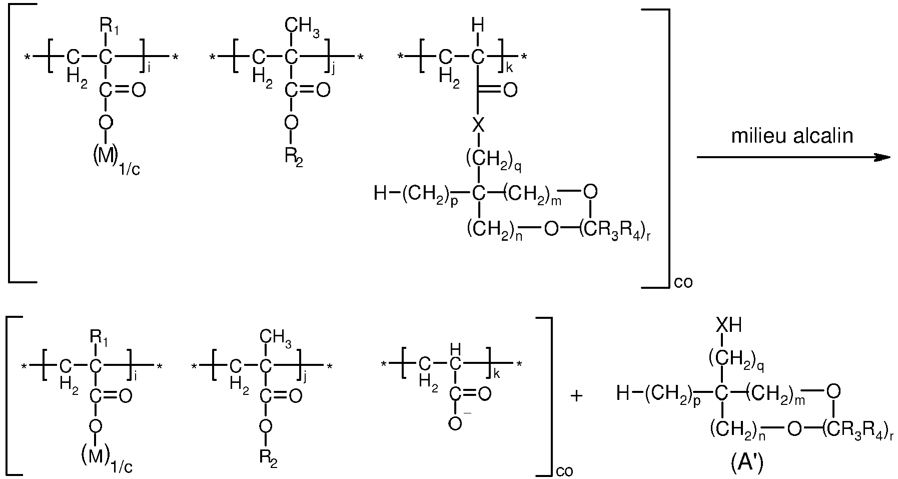

Le composé de formule (A'), notamment lorsque X représente O, en particulier de 5-éthyl-5-hydroxyméthyl-1,3-dioxane, permet avantageusement d'éviter la formation de fissures dans les compositions hydrauliques durcies, comme décrit dans le brevet US 6,251,180. Il y a un donc un double effet du polymère selon l'invention :
- amélioration du maintien de fluidité de la composition hydraulique dans le temps,
- inhibition de la formation de fissures dans les compositions hydrauliques durcies.

Par contre, la fonction ester du motif de formule (B): 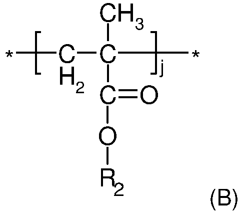 est stable en milieu alcalin. Il est donc possible de moduler l'hydrolyse du polymère en variant la teneur respective des différents motifs dans le polymère.

Il a été démontré que le maintien de fluidité d'une composition hydraulique comprenant comme adjuvant un polymère selon l'invention est amélioré par rapport à celui d'une composition hydraulique comprenant comme adjuvant un polymère exempt de fonctions esters latérales hydrolysables, notamment de formule (W) suivante : 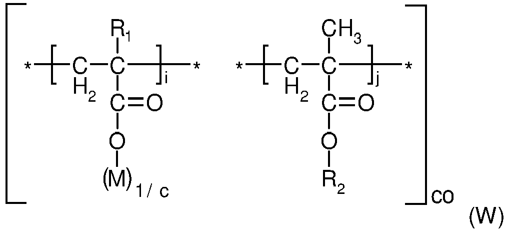 dans laquelle R₁, R₂, M, c, i et j sont tels que définis ci-dessus.

De plus, il a été démontré que le maintien de fluidité d'une composition hydraulique comprenant comme adjuvant un polymère selon l'invention est amélioré par rapport à celui d'une composition hydraulique comprenant comme adjuvant un polymère comprenant des motifs porteurs de fonctions latérales esters hydrolysables de type ester d'éther d'alkyl poly(éthylène glycol) de formule suivante :

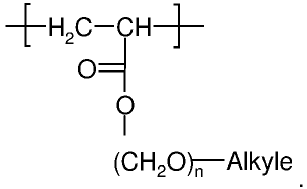

Selon un quatrième aspect, l'invention concerne l'utilisation d'un polymère tel que défini ci-dessus pour la préparation d'une composition hydraulique comprenant :
- un polymère tel que défini ci-dessus,
- un liant hydraulique,
- au moins un granulat, et
- de l'eau.

Les compositions hydrauliques peuvent notamment être du béton, du mortier ou du plâtre.

Les compositions hydrauliques sont préparées de façon classique par mélange des constituants susmentionnés. L'invention concerne également le procédé de préparation d'une composition hydraulique comprenant l'étape de mélange :
- d'un polymère tel que défini ci-dessus,
- d'un liant hydraulique,
- d'au moins un granulat,
- d'eau,
les composants étant ajoutés dans un ordre quelconque.

Le polymère selon l'invention peut être ajouté aux autres composants de la composition hydraulique à sec (généralement en poudre) ou en solution, de préférence en solution aqueuse. Ainsi, selon un autre aspect, l'invention concerne un fluidifiant (ou plastifiant) pour compositions hydrauliques comprenant le polymère tel que défini ci-dessus en solution dans un solvant, notamment en solution aqueuse, de préférence de 5 à 50% en poids de polymère, notamment de 10 à 30% en poids, en particulier de l'ordre de 20% en poids par rapport au poids total de la solution. L'eau de ladite solution aqueuse peut notamment être l'eau de prémouillage. Par « eau de prémouillage », on entend une partie de l'eau totale, qui sert à humidifier les granulats avant le gâchage permettant de simuler l'état hygrométrique des granulats, souvent humide, dans une usine à béton ou sur le chantier. Ladite solution aqueuse comprenant le polymère peut éventuellement comprendre d'autres additifs,par exemple un agent anti-mousse, un additif anti-entraînement d'air un accélérateur ou retardateur de prise, un agent modificateur de rhéologie, un autre fluidifiant (plastifiant ou superplastifiant) et/ou tout autre additif classiquement utilisé dans les compositions hydrauliques. Dans un mode de réalisation préféré, ladite solution aqueuse comprenant le polymère comprend un fluidifiant, notamment un superplastifiant, par exemple un superplastifiant CHRYSO®Fluid Premia 180 ou CHRYSO®Fluid Premia 196.

Par « granulats », on entend un ensemble de grains minéraux de diamètre moyen compris entre 0 et 125 mm. Selon leur diamètre, les granulats sont classés dans l'une des six familles suivantes: fillers, sablons, sables, graves, gravillons et ballast (norme XP P 18-545). Les granulats les plus utilisés sont les suivants:
- les fillers, qui ont un diamètre inférieur à 2 mm et pour lesquels au moins 85 % des granulats ont un diamètre inférieur à 1,25 mm et au moins 70 % des granulats ont un diamètre inférieur à 0,063 mm,
- les sables de diamètre compris entre 0 et 4 mm (dans la norme 13-242, le diamètre pouvant aller jusqu'à 6 mm),
- les graves de diamètre supérieur à 6,3 mm,
- les gravillons de diamètre compris entre 2 mm et 63 mm.
Les sables sont donc compris dans la définition de granulat selon l'invention.
Les fillers peuvent notamment être d'origine calcaire ou dolomitique.

Lors de l'étape de mélange, d'autres additifs peuvent être ajoutés, par exemple une addition minérale et/ou des additifs, par exemple un additif anti-entraînement d'air, un agent antimousse, un accélérateur ou retardateur de prise, un agent modificateur de rhéologie, un autre fluidifiant (plastifiant ou superplastifiant), notamment un superplastifiant, par exemple un superplastifiant CHRYSO®Fluid Premia 180 ou CHRYSO®Fluid Premia 196.

Par « addition minérale», on entend un matériau minéral finement divisé utilisé dans le béton afin d'améliorer certaines propriétés ou de lui conférer des propriétés particulières. La norme NF EN 206 - 1 distingue deux types d'additions minérales : les additions quasiment inertes (de type I) et les additions à caractère pouzzolanique ou hydraulique latent (de type II).
Les additions de type I sont :
- les fillers calcaires, conformes à l'EN 12620:2000
- les pigments, conformes à l'EN 12878
- les additions calcaires, conformes à la norme NF P 18-508
- les additions siliceuses, conformes à la norme NF P 18-509
Les additions de type II regroupent :
- les cendres volantes, conformes à la norme NF EN 450
- les fumées de silice, conformes à l'EN 13263-1

Généralement, 0,1 à 3%, notamment entre 1,0 et 2,0%, en poids d'extrait sec, de polymère selon l'invention sont utilisés dans la composition hydraulique.

Selon un cinquième aspect, l'invention concerne une composition hydraulique comprenant :
- un polymère selon l'invention tel que défini ci-dessus,
- un liant hydraulique,
- un granulat,
- de l'eau.
La composition hydraulique peut comprendre en outre les additifs susmentionnés.

L'invention concerne également un procédé d'amélioration du maintien de fluidité dans le temps d'une composition hydraulique comprenant une étape consistant à mettre en contact une composition hydraulique ou un constituant d'une composition hydraulique avec un polymère tel que défini ci-dessus. Les constituants d'une composition hydraulique sont notamment ceux mentionnés ci-dessus.

### [Figure]

La figure 1 annexée représente l'étalement en mm en fonction du temps en min de compositions de mortier de l'exemple 2 comprenant :
   - soit le polymère (A) de l'exemple comparatif (ronds),
   - soit les polymères (C1) et (C2) de l'exemple comparatif 2 (respectivement triangles et croix),
   - soit le polymère (B) selon l'invention de l'exemple 1 (carrés).
La figure 2 annexée représente le retrait en µm/m en fonction du temps en jours de compositions de mortier de l'exemple 4 comprenant :
   - soit aucun adjuvant (XXX),
   - soit 0,5% en poids sec d'alcool 5-éthyl-5-hydroxyméthyl-1,3-dioxane (XXX),
   - soit 1% en poids sec d'alcool 5-éthyl-5-hydroxyméthyl-1,3-dioxane (XXX),
   - soit 3% en poids sec de polymère (B) selon l'invention de l'exemple 1 (XXX).

### [Exemple]

### Exemple comparatif : Synthèse d'un polymère de formule (A) exempt de chaîne latérale hydrolysable

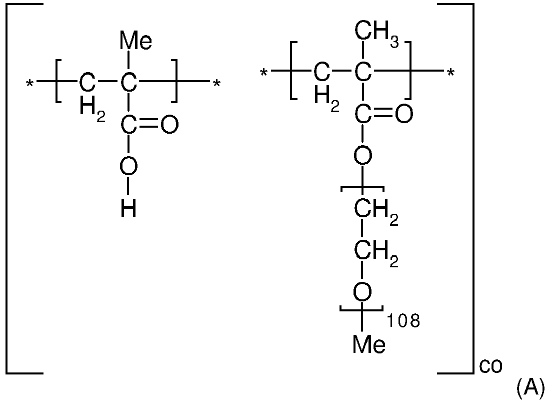

Dans un réacteur en verre, équipé d'une agitation mécanique et d'un réfrigérant, a été introduite en pied de cuve une solution aqueuse (231 g) contenant un mélange de methallyl sulfonate de sodium (1,4 g) (ALTICHEM) et de métabisulfite de sodium (3,1 g) (ALTICHEM). Le pH du mélange a été ajusté à 2 par addition modérée d'acide sulfurique 96% (0,4 g) (ALTICHEM). Le mélange a été maintenu sous forte agitation et sous fort bullage d'azote pendant 1h et porté à une température de 65°C. On a ajouté ensuite, et en parallèle, une solution aqueuse (100 g) contenant du persulfate d'ammonium (3,7 g) (ALTICHEM) et une solution contenant du méthacrylate de MPEG 4750 (642,1 g) (CHRYSO) et de l'acide méthacrylique (18,5 g) (EVONIK). Les temps d'addition étaient de 3 h pour le mélange de monomères et de 4 h pour la solution de persulfate d'ammonium. Après une heure d'agitation à 65°C, le mélange réactionnel a été refroidi à 20°C et dilué dans de l'eau à hauteur de 20% d'extrait sec.

### Exemple comparatif 2 : Synthèse de polymères de formules (C1) et (C2) comportant une chaîne latérale hydrolysable de type ester d'éther d'alkyl poly(éthylène glycol)

### * Polymère (C1) comprenant une chaîne latérale hydrolysable de type acrylate de MPEG350

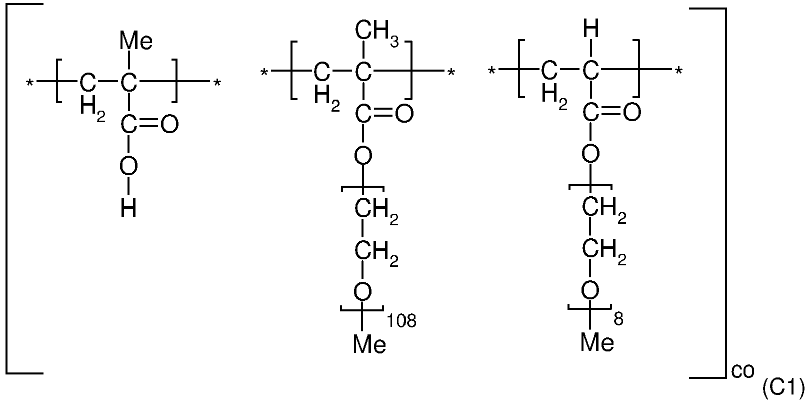

Dans un réacteur en verre, équipé d'une agitation mécanique et d'un réfrigérant, a été introduite en pied de cuve une solution aqueuse (350 g) contenant un mélange de methallyl sulfonate de sodium (1,14 g) (ALTICHEM) et métabisulfite de sodium (1,72 g) (ALTICHEM). Le pH du mélange a été ajusté à 2 par addition modérée d'acide sulfurique 96% (0,9 g). Le mélange a été maintenu sous forte agitation et sous fort bullage d'azote pendant 1h et porté à une température de 65°C. On a ajouté ensuite, et en parallèle, une solution aqueuse (100 g) contenant du persulfate d'ammonium (1,3 g) (ALTICHEM) et une solution contenant du méthacrylate de MPEG 4750 (506 g) (CHRYSO), l'acide méthacrylique (1,6 g) (EVONIK) et de l'acrylate de MPEG 350 (47,4g) (Sartomer CD551). Les temps d'addition étaient de 3 h pour le mélange de monomères et de 4 h pour la solution de persulfate d'ammonium. Après une heure d'agitation à 65°C, le mélange réactionnel a été refroidi à 20°C et dilué dans de l'eau à hauteur de 20% d'extrait sec.

### * Polymère (C2) comprenant une chaîne latérale hydrolysable de type acrylate de MPEG550

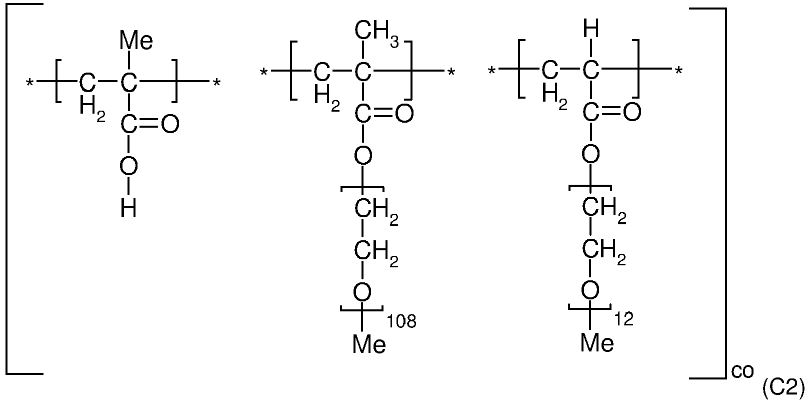

Dans un réacteur en verre, équipé d'une agitation mécanique et d'un réfrigérant, a été introduite en pied de cuve une solution aqueuse (290 g) contenant un mélange de methallyl sulfonate de sodium (0,99 g) (ALTICHEM) et métabisulfite de sodium (1,49 g) (ALTICHEM). Le pH du mélange a été ajusté à 2 par addition modérée d'acide sulfurique 96% (0,9 g) (ALTICHEM). Le mélange a été maintenu sous forte agitation et sous fort bullage d'azote pendant 1h et porté à une température de 65°C. On a ajouté ensuite, et en parallèle, une solution aqueuse (100 g) contenant du persulfate d'ammonium (1,79 g) (ALTICHEM) et une solution contenant du méthacrylate de MPEG 4750 (438 g) (CHRYSO), l'acide méthacrylique (0,7 g) (EVONIK) et de l'acrylate de MPEG 550 (66,3 g) (Sartomer CD278). Les temps d'addition étaient de 3 h pour le mélange de monomères et de 4 h pour la solution de persulfate d'ammonium. Après une heure d'agitation à 65°C, le mélange réactionnel a été refroidi à 20°C et dilué dans de l'eau à hauteur de 20% d'extrait sec.

### Exemple 1 : Synthèse d'un polymère selon l'invention comprenant des chaînes latérales hydrolysables de formule (B) :

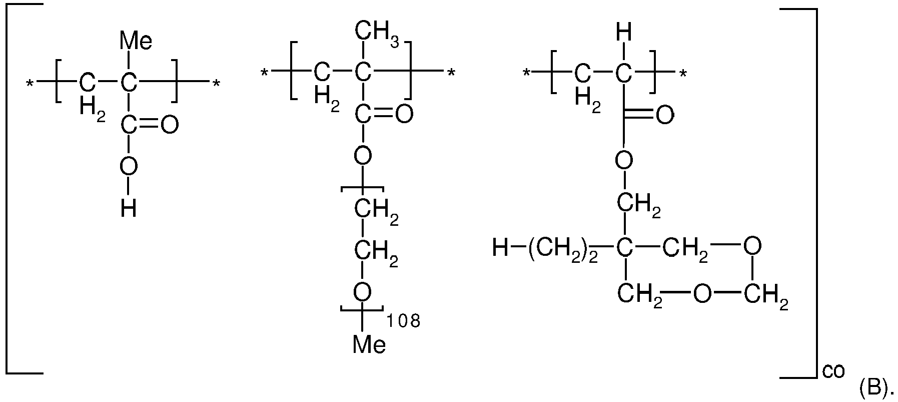

Dans un réacteur en verre, équipé d'une agitation mécanique et d'un réfrigérant, a été introduite en pied de cuve une solution aqueuse (332 g) contenant un mélange de methallyl sulfonate de sodium (1,3 g) (ALTICHEM) et métabisulfite de sodium (1,2 g) (ALTICHEM). Le pH du mélange a été ajusté à 2 par addition modérée d'acide sulfurique 96% (0,5 g). Le mélange a été maintenu sous forte agitation et sous fort bullage d'azote pendant 1h et porté à une température de 65°C. On a ajouté ensuite, et en parallèle, une solution aqueuse (100 g) contenant du persulfate d'ammonium (1,4 g) (ALTICHEM) et une solution contenant du méthacrylate de MPEG 4750 (520 g) (CHRYSO), l'acide méthacrylique (0,3 g) (EVONIK) et de l'acrylate du formal triméthylolpropane cyclique (43,5 g) (Sartomer SR531).
Les temps d'addition étaient de 3 h pour le mélange de monomères et de 4 h pour la solution de persulfate d'ammonium. Après une heure d'agitation à 65°C, le mélange réactionnel a été refroidi à 20°C et dilué dans de l'eau à hauteur de 20% d'extrait sec.

### Exemple 2 : Utilisation des polymères (A) et (B) comme fluidifiants.

Les dispersants à 20% d'extrait sec (consistant en un mélange des polymères (A), (B), (C1) ou (C2) à 20% dans l'eau) ont été évalués par une mesure d'ouvrabilité sur mortier. La composition du mortier était celle du tableau 1 :

**Tableau 1 : Composition du mortier**

| **Composant** | **masse (g)** |
|---|---|
| CEM I 52,5 N LE HAVRE | 624,9 |
| Filler calcaire ERBRAY | 412,1 |
| Sable AFNOR | 1350 |
| Fulchiron (sable correcteur) | 587 |
| Eau totale | 375 |

L'ouvrabilité a été évaluée par mesure de diamètre d'étalement (slump flow - diamètre de la flaque formée après écoulement) comme suit. On a rempli un moule sans fond de forme tronconique, de reproduction à l'échelle 0,5 du cône d'Abrams (voir norme NF 18-451, 1981) de dimensions suivantes :

| | |
|---|---|
| diamètre du cercle de la base supérieure | 5 cm |
| diamètre du cercle de la base inférieure | 10 cm |
| hauteur | 15 cm |

Après malaxage du mortier renfermant le polymère, on a remplit le moule, on a arasé ensuite la surface supérieure du cône puis on a soulevé le cône verticalement et on a mesuré l'étalement à 90° avec un mètre à ruban. Le résultat de la mesure d'étalement est la moyenne des 2 valeurs à +/- 10 mm. Les essais ont été réalisés à 20°C. Les essais ont été répétés à différentes échéances à 5, 30, 60, 90 et 120 minutes selon 2 diamètres.

Les pourcentages en poids de polymère (A), (B), (C1) ou (C2) en sec ont été ajustés de manière à obtenir une valeur d'étalement initiale de 250 ±20 mm. Ainsi, respectivement 0,5%, 1,2%, 2,2% et 2,5% de polymère (A), (B), (C1) ou (C2) en poids sec ont été utilisés dans le mortier. La dose de polymère (B), (C1) ou (C2) à utiliser est donc plus importante que la dose de polymère (A), ce qui peut s'expliquer par le fait qu'initialement (soit avant hydrolyse des fonctions esters), les polymères (B) , (C1) et (C2), comprenant des monomères hydrolysables, comprennent en proportion moins de fonctions carboxylate apte à se lier aux grains de liant hydraulique que le polymère (A). Les pourcentages en poids de polymères (C1) et (C2), par extrait sec sont du même ordre de grandeur, ce qui s'explique par les structures chimiques sont proches de ces deux polymères.

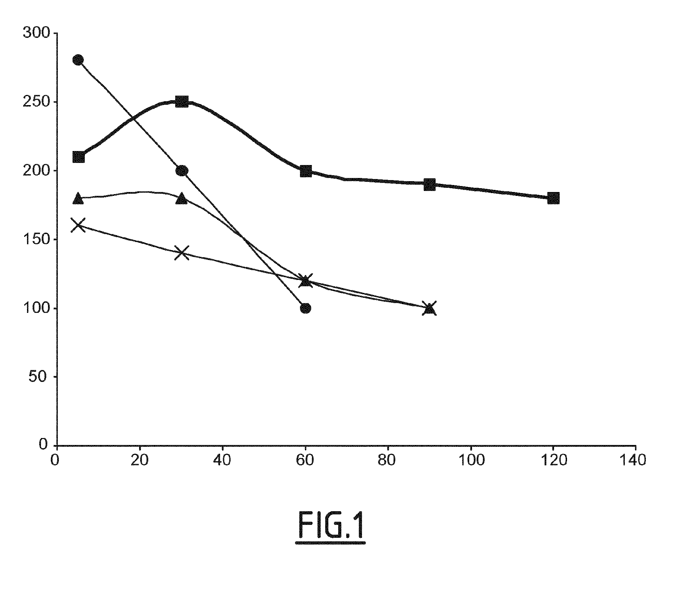

L'évolution de l'étalement au cours du temps est illustrée sur la figure 1 en annexe.

Ces résultats montrent que le maintien de fluidité dans le temps est nettement amélioré lorsque le polymère (B) selon l'invention est utilisé. La fluidité est maintenue au moins deux heures après mélange des constituants du mortier, alors qu'elle baisse de façon significative avec les trois autres polymères au cours de la première heure.

### Exemple 3 : Formulation du polymère (B) avec le superplastifiant CHRYSO®Fluid Premia 180 :

L'exemple 2 a été reproduit en ajoutant un superplastifiant CHRYSO®Fluid Premia 180 à la composition en plus du polymère (B) selon l'invention. Les pourcentages en poids de polymère (B) et du CHRYSO®Fluid Premia 180 ont été ajustés de manière à obtenir une valeur d'étalement initiale de 250 mm ± 20 mm. Ainsi 1,1% du mélange polymère (B) et CHRYSO®Fluid Premia 180 en poids sec ont été utilisés dans le mortier. La dose du mélange des deux polymères est inférieure à celle du polymère (B) utilisé seul (cf exemple 2), ce qui peut s'expliquer par un caractère réducteur d'eau plus important du CHRYSO®Fluid Premia 180 permettant d'abaisser le dosage global.
L'évolution de l'étalement au cours du temps est décrite dans le tableau 2 ci-dessous :

**Tableau 2 : Evolution de l'étalement au cours du temps**

| | Etalement (mm) |
|---|---|
| Temps (min) | Mélange Polymère (B) + CHRYSO®Fluid Premia 180 (1,1%) |
| 5 | 235 |
| 30 | 180 |
| 60 | 165 |
| 90 | 150 |
| 120 | 110 |

### Exemple 4 : Utilisation du polymère (B) pour inhiber la formation de fissures dans les compositions hydrauliques durcies.

### 1) Préparation du mortier selon la norme NF 196-1 d'avril 2006

Les proportions en masse étaient suivantes : une partie de ciment, trois parties de sable normalisé et une demi partie d'eau (rapport eau/ ciment = 0.5). Une gâchée pour trois éprouvettes était constituée de (450 g) de ciment et de 1350 g de sable et 225 g d'eau. La composition du mortier était celle du tableau 3.

**Tableau 3 : Composition du mortier**

| Composant | masse (g) |
|---|---|
| CEM I 52,5 N SPLC | 450 |
| sable AFNOR | 1350 |
| Eau totale | 225 |

Le mode opératoire de malaxage était le suivant :
a) Introduction de l'eau et du ciment dans le bol et éventuellement de l'adjuvant (polymère (B) (2% en poids sec) ou 5-éthyl-5-hydroxyméthyl-1,3-dioxane (0,5% ou 1% en poids sec)) en prenant soin d'éviter toute perte d'eau ou de ciment ;
b) Dés que l'eau et le ciment étaient entrés en contact, mise immédiate du malaxeur en marche à petite vitesse tout en lançant un chronométrage des étapes de malaxage. De plus enregistrement du temps de démarrage à la minute près, comme étant le « temps zéro ». Après 30 s de malaxage, introduction régulière de tout le sable pendant 30s suivantes ;
c) Arrêt du malaxeur pendant 90 s. Pendant 30 s, on a enlevé au moyen d'une raclette en caoutchouc ou en plastique tout le mortier adhérant aux parois au fond du bol et on l'a placé au milieu du bol ;
d) Reprise du malaxage à grande vitesse.

### 2) Confection des éprouvettes et conservation avant démoulage selon la norme NF 196-1 d'avril 2006

La confection des éprouvettes et leur conversation avant démoulage sont exécutées conformément à la norme NF EN 196-1.

### 3) Méthodes d'essais de détermination de retrait selon la norme NF P 15- 433 Février 1994

Le retrait du mortier est directement corrélable avec la fissuration, comme explicité dans la demande EP 1 027 303.

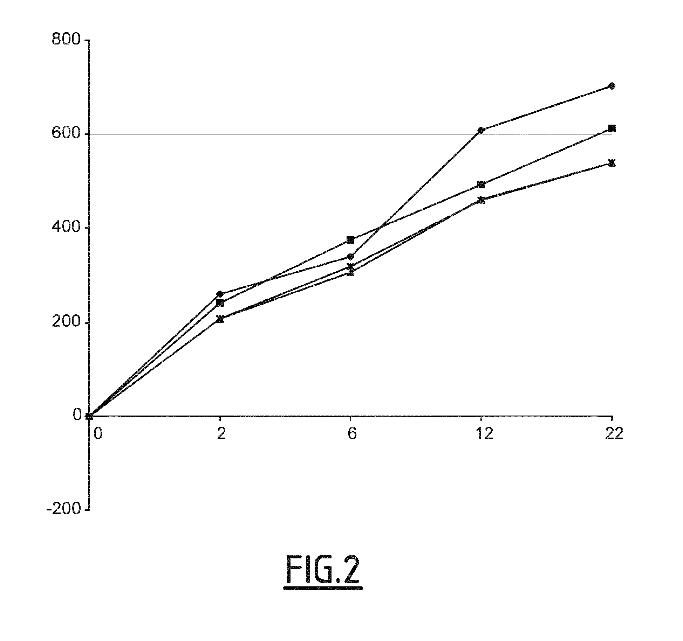

Pour les évaluations du retrait, nous avons comparé des éprouvettes avec et sans adjuvant.
Les éprouvettes sans adjuvant servent de contrôle.
Les éprouvettes comprenant du 5-éthyl-5-hydroxyméthyl-1,3-dioxane (alcool (A') dans la demande) servent d'exemple comparatif. A titre de comparaison, si l'on considère que toutes les fonctions esters du polymère (B) se clivent pour former l'alcool 5-éthyl-5-hydroxyméthyl-1,3-dioxane, l'éprouvette comprenant 2% en poids sec du polymère (B) selon l'invention comprend 0,7% d'alcool 5-éthyl-5-hydroxyméthyl-1,3-dioxane. L'évolution du retrait des éprouvettes au cours du temps est illustrée sur la figure 2 en annexe.
Une diminution du retrait de 23% pour un dosage de 3% massique de polymère (B) est observée. La diminution du retrait est plus importante avec 3% massique de polymère (B) comme adjuvant qu'avec 0,5 ou 1% massique d'alcool 5-éthyl-5-hydroxyméthyl-1,3-dioxane.

## Revendications

1. Polymère comprenant une chaîne principale comprenant des motifs de formule (A): 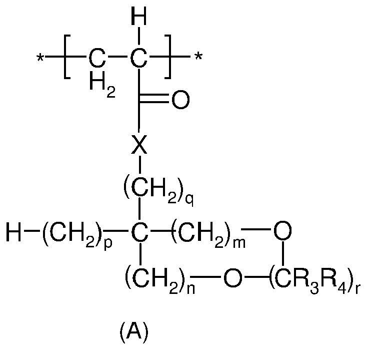 et des chaînes latérales comprenant des groupes R₂,
où :
- X représente O ou NH,
- R₂ représente un groupe (R₇O)_{z}R₈, avec :
- R₇ représente un groupe alkylène en C₂-C₃,
- R₈ représente H, un alkyle, un cycloalkyle en C₁-C₁₂ ou un aryle éventuellement substitués, et
- z représente un nombre entier de 1 à 250,
- m, n, p et q représentent indépendamment un nombre entier compris entre 0 et 3,
- r représente un nombre entier compris entre 1 et 3,
- R₃ et R₄ représentent indépendamment H ou un groupe alkyle en C₁-C₆.

2. Polymère selon la revendication 1 comprenant des motifs de formules (A) et (B) suivantes : 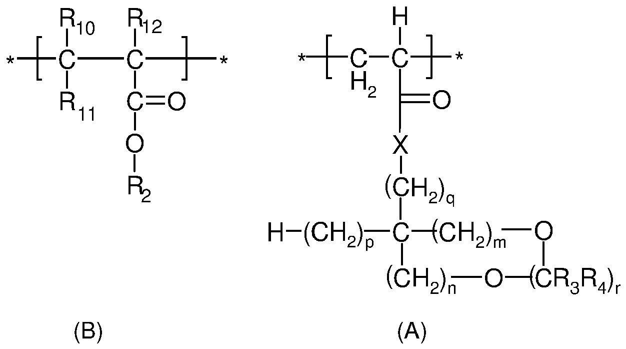 dans lesquels :
- X, m, n, p, q , r, R₂, R₃ et R₄ sont tels que définis dans la revendication 1,
- R₁₀, R₁₁ et R₁₂ représentent indépendamment un groupe choisi parmi H, alkyle, -COO-alkyle, COOR₂ et COO(M)_{1/c} où M représente un cation et c est un nombre entier représentant la valence du cation M.

3. Polymère selon la revendication 2, comprenant les motifs de formules (A), (B) et (C) suivantes : 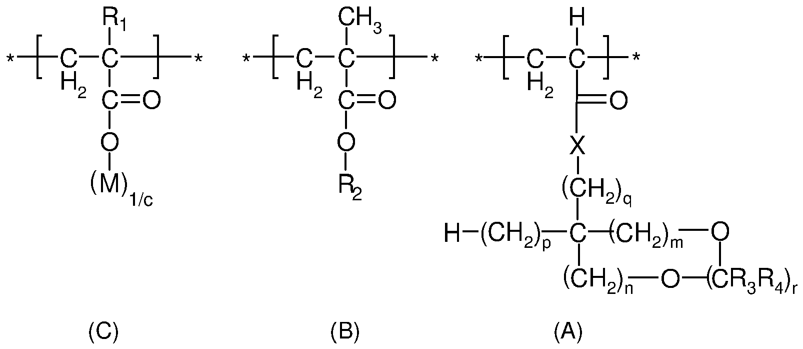 dans lesquels :
- X, m, n, p, q, r, R₂, R₃ et R₄ sont tels que définis dans la revendication 2,
- R₁ représente H ou un méthyle,
- M représente H ou un cation et c est un nombre entier représentant la valence du cation M.

4. Polymère selon la revendication 3, de formule (I) suivante : 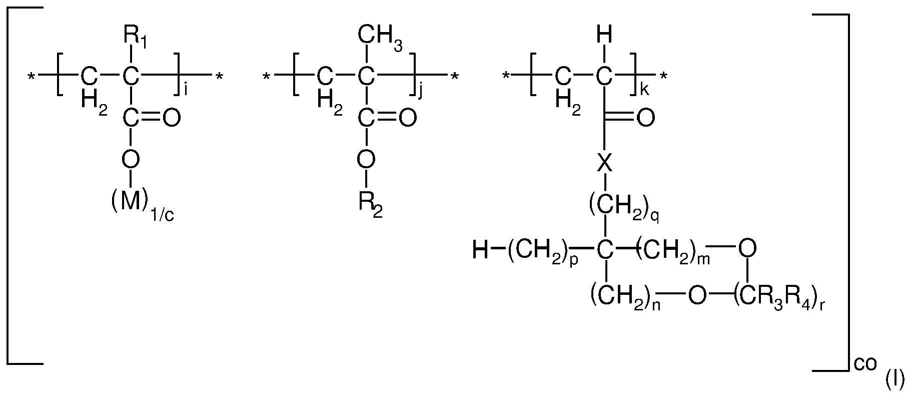 dans laquelle :
- i, j et k représentent indépendamment un nombre entier de 1 à 1000,
- X, M, c, R₁, R₂, R₃, R₄, m, n, p, q et r sont tels que définis dans la revendication 3.

5. Polymère selon l'une quelconque des revendications 1 à 4, dans lequel :
- q représente 0 ou 1, et/ou
- p représente 0, 1 ou 2, et/ou
- m représente 1, et/ou
- n représente 1, et/ou
- r représente 1.

6. Polymère selon l'une quelconque des revendications 1 à 5, dans lequel R₃ et R₄ représentent indépendamment H, un méthyle ou un éthyle, R₃ et R₄ représentant de préférence H.

7. Polymère selon l'une quelconque des revendications 4 à 6, dans lequel :
- le rapport i/(i+j+k) est de 0,01 à 0,8, et/ou
- le rapport j/(i+j+k) est de 0,01 à 0,65, et/ou
- le rapport k/(i+j+k) est de 0,05 à 0,90.

8. Polymère selon l'une quelconque des revendications 1 à 7, comprenant de 2 à 10% en masse d'unité de formule (A).

9. Polymère selon l'une quelconque des revendications 1 à 8, de masse moléculaire en poids de 5000 à 500 000 g/mol.

10. Polymère selon l'une quelconque des revendications 1 à 9, dans lequel le polymère a la formule (I') suivante : 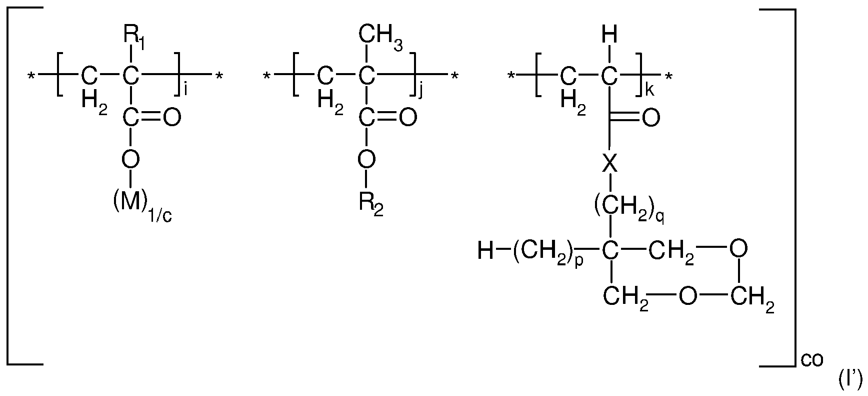 dans laquelle X, R₁, R₂, M, c, i, j, k, p et q sont tels que définis dans la revendication 4.

11. Procédé de préparation d'un polymère selon l'une quelconque des revendications 2 à 10 comprenant une étape a1) de copolymérisation d'un monomère de formule (XII) suivante : 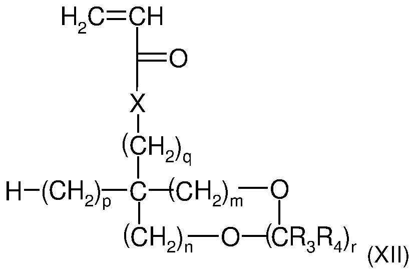 dans laquelle X, R₃, R₄, m, n, p, q et r sont tels que définis dans la revendication 2, avec un monomère de formule (XI') suivante : 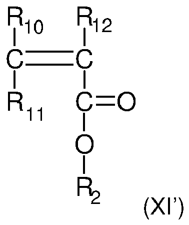 dans laquelle R₂, R₁₀, R₁₁ et R₁₂ sont tels que définis dans la revendication 2.

12. Procédé de préparation selon la revendication 11, comprenant une étape a1) de copolymérisation de monomères de formules (X), (XI) et (XII) suivantes : 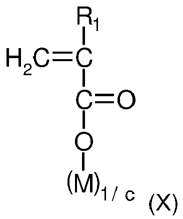 dans laquelle R₁, M et c sont tels que définis dans la revendication 3, 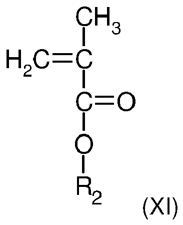 dans laquelle R₂ est tel que défini dans la revendication 3, 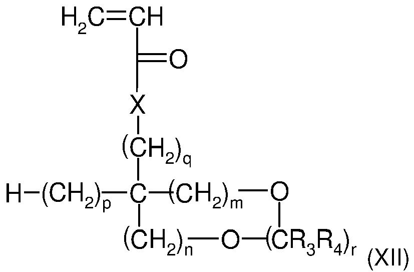 dans laquelle X, R₃, R₄, m, n, p, q et r sont tels que définis dans la revendication 3.

13. Procédé de préparation d'un polymère selon l'une quelconque des revendications 2 à 9 comprenant les étapes consistant à :
a2) copolymériser un monomère de formule (XXII) suivante : 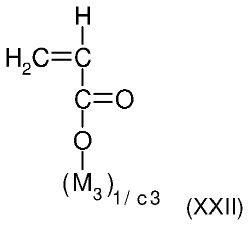 dans laquelle M₃ représente H, un cation métallique ou un cation ammonium et c3 est un nombre entier représentant la valence du cation M₃,
avec un monomère de formule (XXI') suivante : 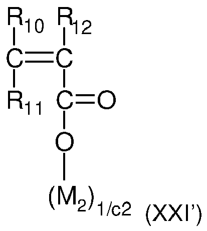 dans laquelle R₁₀, R₁₁, et R₁₂ sont tels que définis dans la revendication 2, M₂ représente H, un cation métallique ou un cation ammonium et c2 est un nombre entier représentant la valence du cation M₂,
b) estérification du polymère obtenu lors de l'étape a2) par des composés R₂-GP₁ et 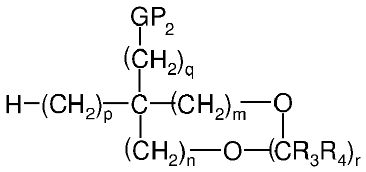 dans lesquelles R₂, R₃, R₄, m, n, p, q et r sont tels que définis dans la revendication 2 et GP₁ et GP₂ sont des groupes partants, notamment indépendamment choisis parmi -OH, -OTs, OMs, -CI et -Br.

14. Procédé de préparation selon la revendication 13, comprenant les étapes consistant à :
a2) copolymériser des monomères de formules (X), (XXI) et (XXII) suivantes : 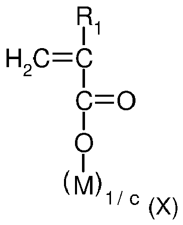 dans laquelle R₁, M et c sont tels que définis dans la revendication 3, 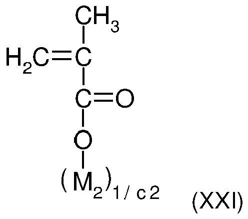 dans laquelle M₂ représente H, un cation métallique ou un cation ammonium et c2 est un nombre entier représentant la valence du cation M₂, 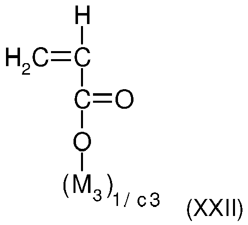 dans laquelle M₃ représente H, un cation métallique ou un cation ammonium et c3 est un nombre entier représentant la valence du cation M₃,
pour obtenir un polymère (XXV) comprenant des motifs de formules suivantes : 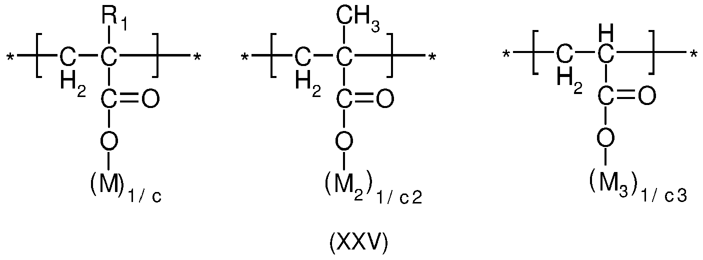
b) estérification du polymère (XXV) par des composés R₂-GP₁ et 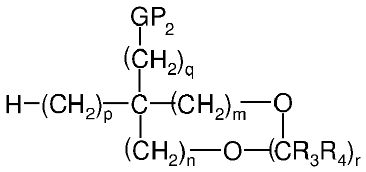 dans lesquelles R₂, R₃, R₄, m, n, p, q et r sont tels que définis dans la revendication 3 et GP₁ et GP₂ sont des groupes partants, notamment indépendamment choisis parmi -OH, -OTs, OMs, -CI et -Br.

15. Utilisation du polymère tel que défini dans l'une quelconque des revendications 1 à 10 pour améliorer le maintien de fluidité de compositions hydrauliques et inhiber la formation de fissures dans les compositions hydrauliques durcies.

16. Fluidifiant pour compositions hydrauliques comprenant le polymère tel que défini dans l'une quelconque des revendications 1 à 10 en solution dans un solvant, notamment en solution aqueuse, comprenant de préférence de 5 à 50% en poids dudit polymère, par rapport au poids total de la solution..

17. Composition hydraulique comprenant :
- un polymère tel que défini dans l'une quelconque des revendications 1 à 10,
- un liant hydraulique,
- un granulat, et
- de l'eau.

18. Composition hydraulique selon la revendication 17, où la composition hydraulique est du béton, du mortier ou du plâtre.

## Patentansprüche

1. Polymer, das eine Hauptkette umfasst, die Motive der Formel (A) umfasst: 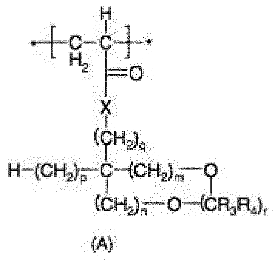 und Seitenketten, die R₂-Gruppen umfassen,
wobei:
- X O oder NH darstellt,
- R₂ eine Gruppe (R₇O)_{z}R₈ darstellt mit:
- R₇ eine C₂-C₃-Alkylengruppe darstellt,
- R₈ H, ein Alkyl, ein C₁-C₁₂-Cycloalkyl oder ein Aryl, eventuell substituiert, darstellt,
- z eine ganze Zahl von 1 bis 250 darstellt,
- m, n, p und q unabhängig eine ganze Zahl zwischen 0 und 3 inklusive darstellen,
- r eine ganze Zahl zwischen 1 und 3 inklusive darstellt,
- R₃ und R₄ unabhängig H oder eine C₁-C₆-Alkylgruppe darstellen.

2. Polymer nach Anspruch 1, das folgende Motive der Formeln (A) und (B) umfasst: 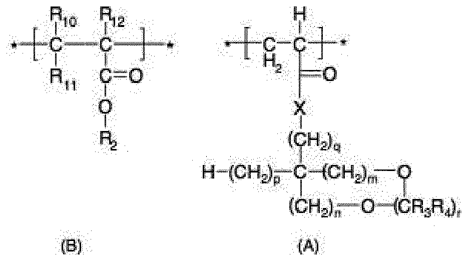 wobei:
- X, m, n, p, q , r, R₂, R₃ und R₄ so sind wie in Anspruch 1 definiert,
- R₁₀, R₁₁ und R₁₂ unabhängig eine Gruppe darstellen, ausgewählt aus H, Alkyl, -COO-Alkyl, COOR₂ und COO(M)_{1/c}, wobei M ein Kation darstellt und c eine ganze Zahl ist, die die Wertigkeit des Kations M darstellt.

3. Polymer nach Anspruch 2, das folgende Motive der Formeln (A), (B) und (C) umfasst: 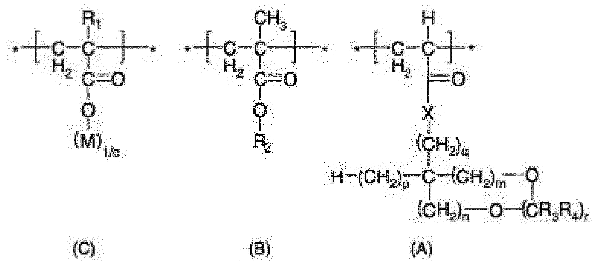 wobei:
- X, m, n, p, q , r, R₂, R₃ und R₄ so sind wie in Anspruch 2 definiert,
- R₁ H oder ein Methyl darstellt,
- M H oder ein Kation darstellt und c eine ganze Zahl ist, die die Wertigkeit des Kations M darstellt.

4. Polymer nach Anspruch 3 der folgenden Formel (I): 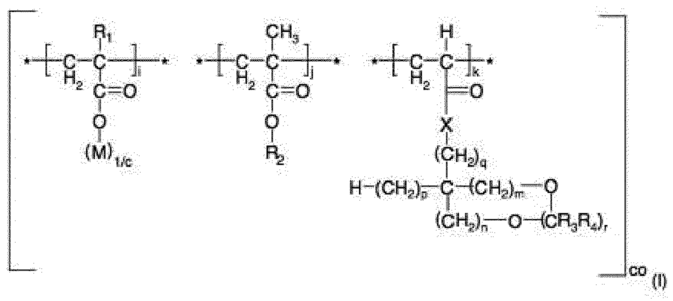 wobei:
- i, j und k unabhängig eine ganze Zahl von 1 bis 1000 darstellen,
- X, M, c, R₁, R₂, R₃, R₄, m, n, p, q und r so sind wie in Anspruch 3 definiert.

5. Polymer nach einem der Ansprüche 1 bis 4,
wobei:
- q 0 oder 1 darstellt, und/oder
- p 0, 1 oder 2 darstellt, und/oder
- m 1 darstellt, und/oder
- n 1 darstellt, und/oder
- r 1 darstellt.

6. Polymer nach einem der Ansprüche 1 bis 5, wobei R₃ und R₄ unabhängig H, ein Methyl oder ein Ethyl darstellen, wobei R₃ und R₄ vorzugsweise H darstellen.

7. Polymer nach einem der Ansprüche 4 bis 6, wobei:
- das Verhältnis i/(i+j+k) von 0,01 bis 0,8 ist, und/oder
- das Verhältnis j/(i+j+k) von 0,01 bis 0,65 ist, und/oder
- das Verhältnis k/(i+j+k) von 0,05 bis 0,90 ist.

8. Polymer nach einem der Ansprüche 1 bis 7, das von 2 bis 10 Massen-% Formeleinheit (A) umfasst.

9. Polymer nach einem der Ansprüche 1 bis 8 mit einer gewichtsmittleren Molmasse von 5000 bis 500 000 g/mol.

10. Polymer nach einem der Ansprüche 1 bis 9, wobei das Polymer die folgende Formel (I') hat: 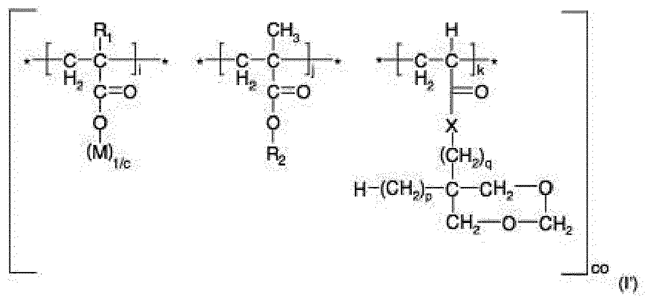 wobei X, R₁, R₂, M, c, i, j, k, p und q so sind wie in Anspruch 4 definiert.

11. Herstellungsverfahren eines Polymers nach einem der Ansprüche 2 bis 10, das einen Copolymerisierungsschritt a1) eines Monomers der folgenden Formel (XII) umfasst: 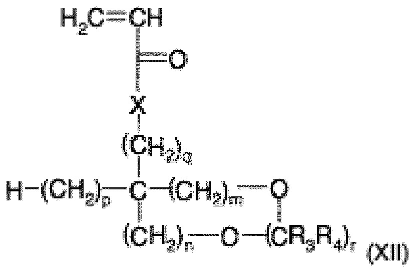 wobei X, R₃, R₄, m, n, p, q und r so sind wie in Anspruch 2 definiert,
mit einem Monomer der folgenden Formel (XI'): 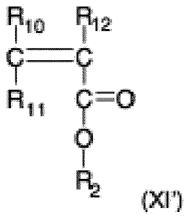 wobei R₂, R₁₀, R₁₁ und R₁₂ so sind wie in Anspruch 2 definiert.

12. Herstellungsverfahren nach Anspruch 11, das einen Copolymerisierungsschritt a1) von Monomeren der folgenden Formeln (X), (XI) und (XII) umfasst: 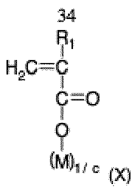 wobei R₁, M und c so sind wie in Anspruch 3 definiert, 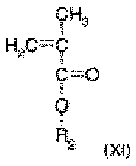 wobei R₂ so ist wie in Anspruch 3 definiert, 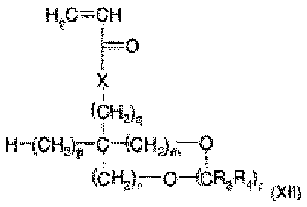 wobei X, R₃, R₄, m, n, p, q und r so sind wie in Anspruch 3 definiert.

13. Herstellungsverfahren eines Polymers nach einem der Ansprüche 2 bis 9, das die Schritte umfasst, die bestehen aus:
a2) Copolymerisieren eines Monomers der folgenden Formel (XXII): 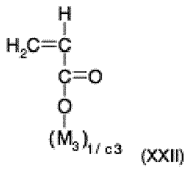 wobei M₃ H, ein Metallkation oder ein Ammoniumkation darstellt und c3 eine ganze Zahl ist, die die Wertigkeit des Kations M₃ darstellt,
mit einem Monomer der folgenden Formel (XXI'): 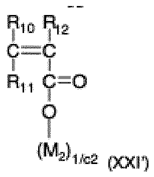 wobei R₁₀, R₁₁ und R₁₂ so sind wie in Anspruch 2 definiert, M₂ H, ein Metallkation oder ein Ammoniumkation darstellt und c2 eine ganze Zahl ist, die die Wertigkeit des Kations M₂ darstellt,
b) Veresterung des in Schritt a2) gewonnenen Polymers durch Verbindungen R₂-GP₁ und 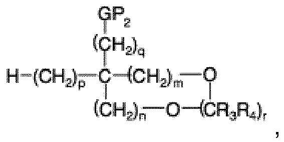 wobei R₂, R₃, R₄, m, n, p, q und r so sind wie in Anspruch 2 definiert und GP₁ und GP₂ Abgangsgruppen sind, insbesondere ausgewählt aus-OH, -OTs, OMs, -Cl und -Br.

14. Herstellungsverfahren nach Anspruch 13, das die Schritte umfasst, die bestehen aus:
a2) Copolymerisieren der Monomere der folgenden Formeln (X), (XXI) und (XXII): 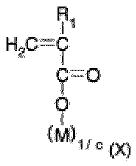 wobei R₁, M und c so sind wie in Anspruch 3 definiert, 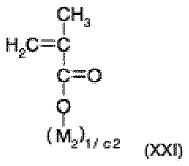 wobei M₂ H, ein Metallkation oder ein Ammoniumkation darstellt und c2 eine ganze Zahl ist, die die Wertigkeit des Kations M₂ darstellt, 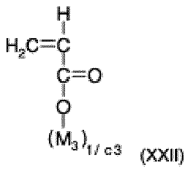 wobei M₃ H, ein Metallkation oder ein Ammoniumkation darstellt und c3 eine ganze Zahl ist, die die Wertigkeit des Kations M₃ darstellt,
um ein Polymer (XXV) zu erhalten, das die folgenden Formelmotive umfasst: 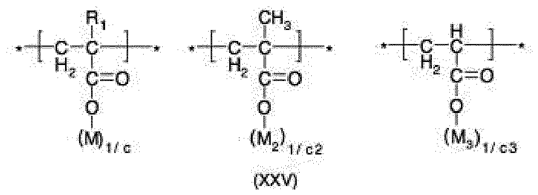
b) Veresterung des Polymers (XXV) durch Verbindungen R₂-GP₂, und 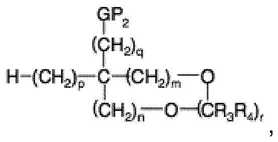 wobei R₂, R₃, R₄, m, n, p, q und r so sind wie in Anspruch 3 definiert und GP1 und GP2 Abgangsgruppen sind, insbesondere ausgewählt aus-OH, -OTs, OMs, -Cl und -Br.

15. Verwendung des Polymers so wie in einem der Ansprüche 1 bis 10 definiert, zur Verbesserung der Aufrechterhaltung der Fluidität von hydraulischen Zusammensetzungen und zur Hemmung der Ausbildung von Rissen in den gehärteten hydraulischen Zusammensetzungen.

16. Fluidisierungsmittel für hydraulische Zusammensetzungen, das das Polymer wie in einem der Ansprüche 1 bis 10 definiert umfasst, gelöst in einem Lösungsmittel, insbesondere in wässriger Lösung, vorzugsweise 5 bis 50 Gew.-% des Polymers im Verhältnis zum Gesamtgewicht der Lösung umfassend.

17. Hydraulische Zusammensetzung, die umfasst:
- ein Polymer so wie in einem der Ansprüche 1 bis 10 definiert,
- ein hydraulisches Bindemittel,
- ein Granulat, und
- Wasser.

18. Hydraulische Zusammensetzung nach Anspruch 17, wobei die hydraulische Zusammensetzung Beton, Mörtel oder Gips ist.

## Claims

1. A polymer comprising a main chain comprising units of formula (A): 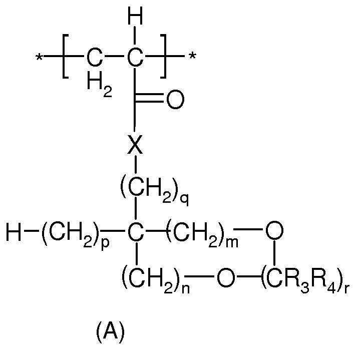 and side chains comprising R₂ groups, wherein:
- X represents O or NH,
- R₂ represents a group (R₇O)_{z}R₈, with:
- R₇ represents a C₂- C₃ alkylene group,
- R₈ represents H, alkyl, a C₁- C₁₂ cycloalkyl or an aryl, optionally substituted, and
- z represents an integer from 1 to 250,
- m, n, p and q represent independently an integer comprised between 0 and 3,
- r represents an integer comprised between 1 and 3,
- R₃ and R₄ represent independently H or a C₁-C₆ alkyl group.

2. The polymer according to claim 1, comprising units of the following formulae (A) and (B): 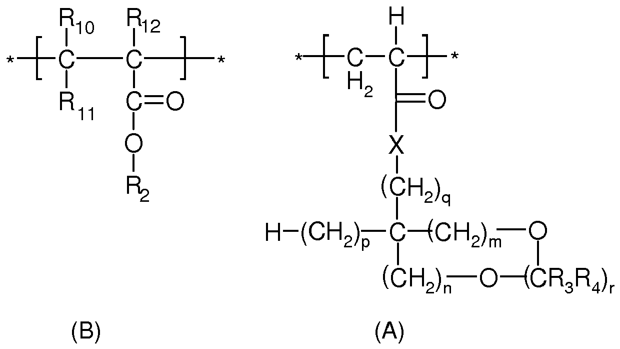 wherein:
- X, m, n, p, q, r, R₂, R₃ and R₄ are as defined in claim 1,
- R₁₀, R₁₁ and R₁₂ represent independently a group selected from H, alkyl, -COO-alkyl, COOR₂ and COO(M)_{1/c} wherein M represents a cation and c is an integer representing the valency of cation M.

3. The polymer according to claim 2, comprising the units of the following formulae (A), (B) and (C): 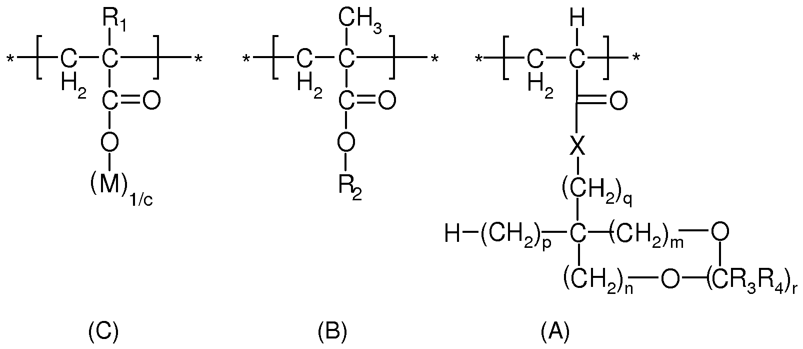 wherein:
- X, m, n, p, q, r, R₂, R₃ and R₄ are as defined in claim 2,
- R₁ represents H or a methyl,
- M represents H or a cation and c is an integer representing the valency of the cation M.

4. The polymer according to claim 3, of the following formula (I): 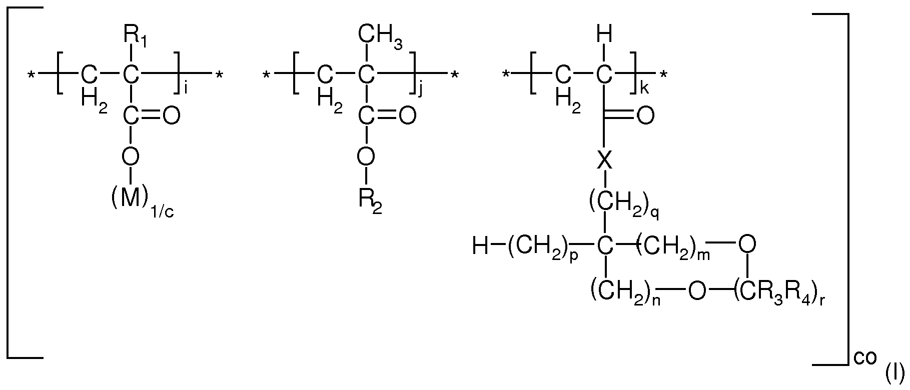 wherein:
- i, j and k represent independently an integer from 1 to 1,000,
- X, M, c, R₁, R₂, R₃, R₄, m, n, p, q and r are as defined in claim 3.

5. The polymer according to any of claims 1 to 4, wherein:
- q represents 0 or 1, and/or
- p represents 0, 1 or 2, and/or
- m represents 1, and/or
- n represents 1, and/or
- r represents 1.

6. The polymer according to any of claims 1 to 5, wherein R₃ and R₄ represent independently H, a methyl or an ethyl, R₃ and R₄ preferably representing H.

7. The polymer according to any of the claims 4 to 6, wherein:
- the ratio i/(i+j+k) is from 0.01 to 0.8, and/or
- the ratio j/(i+j+k) is from 0.01 to 0.65, and/or
- the ratio k/(i+j+k) is from 0.05 to 0.90.

8. The polymer according to any of claims 1 to 7, comprising from 2 to 10% by mass of a unit of formula (A).

9. The polymer according to any of claims 1 to 8, with a weight molecular mass from 5,000 to 500,000 grams/mol.

10. The polymer according to any of claims 1 to 9 wherein the polymer has the following formula (I'): 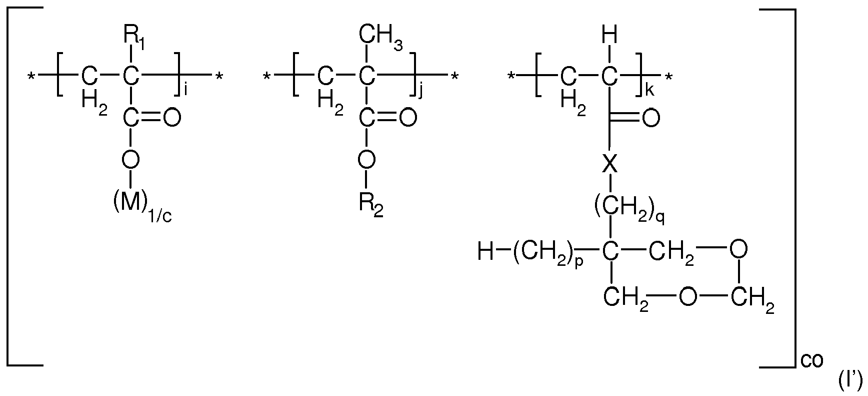 wherein X, R₁, R₂, M, c, i, j, k, p and q are as defined in claim 4.

11. A method for preparing a polymer according to any of claims 2 to 10, comprising a step a1) for copolymerization of a monomer of the following formula (XII): 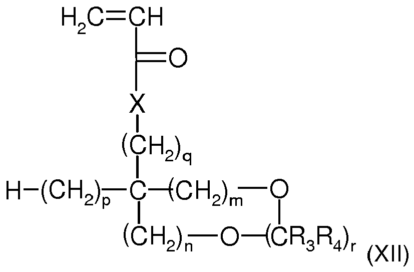 wherein X, R₃, R₄, m, n, p, q and r are as defined in claim 2,
with a monomer of the following formula (XI'): 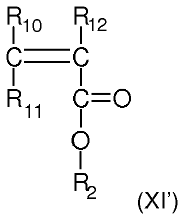 wherein R₂, R₁₀. R₁₁ and R₁₂ are as defined in claim 2.

12. The preparation method according to claim 11, comprising a step (a1) for copolymerization of monomers of the following formulae (X), (XI) and (XII): 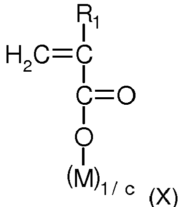 wherein R₁, M and c are as defined in claim 3: 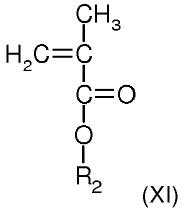 wherein R₂ is as defined in claim 3, 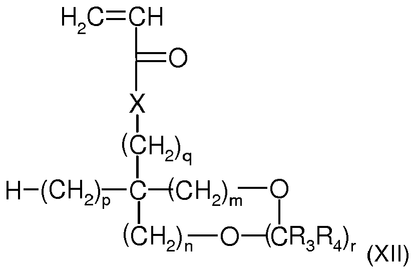 wherein X, R₃, R₄, m, n, p, q and r are as defined in claim 3.

13. A method for preparing a polymer according to any of claims 2 to 9, comprising the steps of:
a2) copolymerizing a monomer of the following formula (XXII): 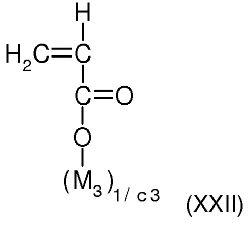 wherein M₃ represents H, a metal cation or an ammonium cation and c₃ is an integer representing the valency of the cation M₃,
with a monomer of the following formula (XXI'): 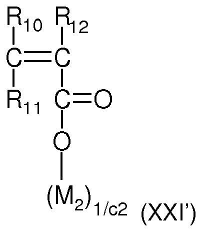 wherein R₁₀, R₁₁ and R₁₂ are as defined in claim 2, M₂ represents H, a metal cation or an ammonium cation and c₂ is an integer representing the valency of the cation M₂,
b) esterification of the polymer obtained during step a2) with compounds R₂-GP₁ and 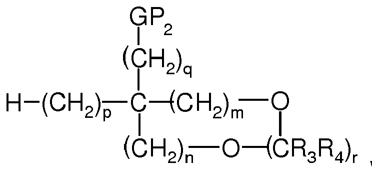 wherein R₂, R₃, R₄, m, n, p, q and r are as defined in claim 2 and GP₁ and GP₂ are leaving groups, notably selected independently from -OH, - OTs, OMs, -Cl and -Br.

14. The preparation method according to claim 13, comprising the steps of:
a2) copolymerizing monomers of the following formulae (X), (XXI) and (XXII): 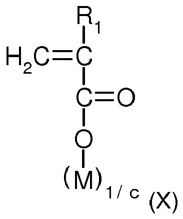 wherein R₁, M and c are as defined in claim 3, 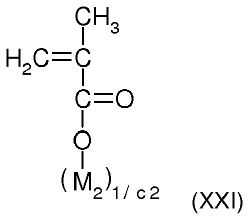 wherein M₂ represents H, a metal cation or an ammonium cation and c2 is an integer representing the valency of the cation M₂, 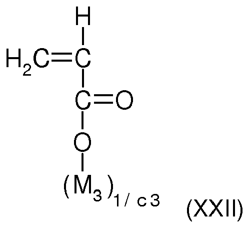 wherein M₃ represents H, a metal cation or an ammonium cation and c3 is an integer representing the valency of the cation M₃,
in order to obtain a polymer (XXV) comprising units of the following formulae: 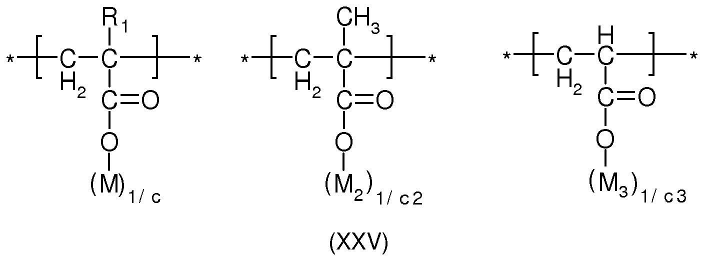
b) esterification of a polymer (XXV) with compounds R₂- GP₁ 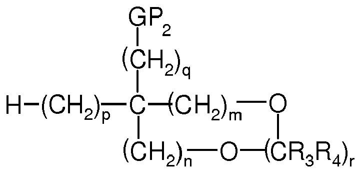 wherein R₂, R₃, R₄, m, n, p, q and r are as defined in claim 3 and GP₁ and GP₂ are leaving groups, notably selected independently from -OH, - OTs, OMs, -Cl and -Br.

15. Use of the polymer as defined in any of claims 1 to 10 for improving maintenance of fluidity of hydraulic compositions and inhibiting the formation of cracks in hardened hydraulic compositions.

16. A thinner for hydraulic compositions comprising the polymer as defined in any of claims 1 to 10 in solution in a solvent, especially in an aqueous solution, preferably comprising from 5 to 50% by weight of said polymer, based on the total weight of the solution.

17. A hydraulic composition comprising:
- a polymer as defined in any of claims 1 to 10,
- a hydraulic binder,
- a granulate, and
- water.

18. The hydraulic composition according to claim 17, wherein the hydraulic composition is concrete, mortar or plaster.
